(19) Europäisches Patentamt
European Patent Office
Office européen des brevets

(11) Veröffentlichungsnummer : **0 036 522**
**B1**

(12) # EUROPÄISCHE PATENTSCHRIFT

(45) Veröffentlichungstag der Patentschrift : **16.11.83**

(51) Int. Cl.$^3$ : **C 09 B 62/10**, D 06 P 3/66, D 06 P 3/32

(21) Anmeldenummer : **81101537.9**

(22) Anmeldetag : **04.03.81**

(54) **Wasserlösliche Nickelphthalocyanin-azofarbstoffe und deren Verwendung.**

(30) Priorität : **14.03.80 DE 3009788**

(43) Veröffentlichungstag der Anmeldung : **30.09.81 Patentblatt 81/39**

(45) Bekanntmachung des Hinweises auf die Patenterteilung : **16.11.83 Patentblatt 83/46**

(84) Benannte Vertragsstaaten : **CH DE FR GB IT LI**

(56) Entgegenhaltungen :
**EP A 0 001 451**
**FR A 1 247 565**
**US A 3 082 201**

**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Ruske, Manfred**
**Merziger Strasse 10**
**D-6700 Ludwigshafen (DE)**

**EP 0 036 522 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Wasserlösliche Nickelphthalocyanin-azofarbstoffe und deren Verwendung

In der FR-A 1 247 565 werden Kupferphthalocyaninazofarbstoffe der allgemeinen Formel

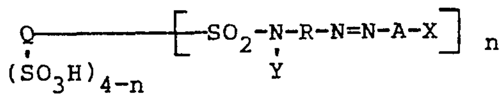

beschrieben, in der Q ein Rest des Kupferphthalocyanins, Y Wasserstoff oder $C_1$- bis $C_3$-Alkyl, R ein Arylenrest, A eine Kupplungskomponente, X den Rest eines Halogentriazins und n 1 oder 2 bedeuten. Nach den Beispielen ist R der Rest der 1,3-Diaminobenzolsulfonsäure-4 und A der Rest der 1-(Aminophenyl)-5-pyrazolon-3-carbonsäure. Die Farbstoffe sind zum Färben und Bedrucken von Cellulose sehr gut geeignet.

Die Erfindung betrifft neue, wasserlösliche Nickelphthalocyanin-azofarbstoffe, die in Form der freien Säuren der allgemeinen Formel I

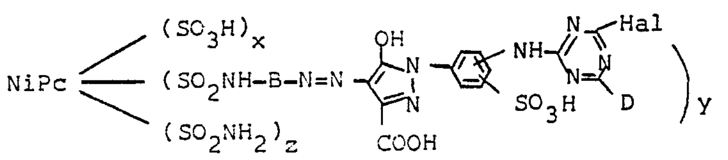

(I)

entsprechen, worin

NiPc ein (x + y + z)-wertiger Nickelphthalocyaninrest,

y = 1 oder 2,

x = 1, 2 oder 3,

z = 0 oder 1, wobei $3 \leq (x + y + z) \leq 4$ ist,

B gegebenenfalls durch $-SO_3H$, $-OCH_3$, $-OC_2H_5$, $-Cl$, $-CH_3$, $C_2H_5$ substituiertes Phenylen, wobei die Zahl der Substituenten bis zu 3 betragen kann,

Hal Fluor, Chlor oder Brom und

D Fluor, Chlor, Brom oder einen nicht-faserreaktiven Substituenten bedeuten.

Die neuen Farbstoffe eignen sich zum Färben und Bedrucken von Fasermaterialien aus Wolle, Seide, Polyamiden, vorzugsweise von Cellulosefasermaterial und von Leder.

Man erhält brillante grüne Färbungen und Drucke, die sich durch gute Naßechtheiten und hohe Farbstärke auszeichnen. Auf Cellulosefasermaterialien, insbesondere auf Baumwolle, werden besonders farbstarke und lichtechte Färbungen erhalten.

Die Farbstoffe der vorliegenden Erfindung übertreffen in der Farbstärke die in der DE-B 11 37 154 und den DE-A 18 03 086 und 26 17 126 beschriebenen Farbstoffe.

Beim Färben von Leder zeichnen sich die erfindungsgemäßen Farbstoffe durch eine besonders gute Kombinierbarkeit mit gelben und blauen anionischen Lederfarbstoffen sowie durch gute Löslichkeit unter den Färbebedingungen und eine gute Baderschöpfung aus.

Die Färbungen auf chromgegerbtem Rindsleder und auf nachgegerbtem Chromrindsleder sind sehr gut lichtecht und haben gute Wasch- und Schweißechtheiten.

Beispiele für nicht-faserreaktive Substituenten D sind $C_1$- bis $C_6$-Alkyl, Aryl wie Phenyl oder Naphthyl, $C_1$- bis $C_6$-Alkylthio, Arylthio wie Phenyl- und Naphthylthio, $C_1$- bis $C_8$-Alkoxy, Alkoxyalkoxy mit 3 bis 11 C-Atomen, Aryloxy wie Phenoxy und Naphthoxy, Amino und substituiertes Amino wie Mono- und Di-$C_1$-bis $C_4$-Alkylamino, Phenyl- und Naphthylamino, wobei die Arylreste gegebenenfalls durch nicht löslich machende Gruppen wie $C_1$- bis $C_4$-Alkyl, $C_1$- bis $C_4$-Alkoxy, Chlor, Brom substituiert sind.

Als nicht-faserreaktive Gruppen D sind $C_1$- bis $C_4$-Alkoxy, wie Methoxy, Ethoxy, n- und iso-Propoxy, Butoxy; niedere Alkoxy-alkoxy mit 3 bis 5 C-Atomen, wie β-Methoxy-ethoxy, β-Ethoxy-ethoxy; Amino, Mono- und Di-$C_1$- bis $C_4$-Alkylamino, wie Methylamino, Ethylamino, Butylamino, Dimethylamino und Diethylamino bevorzugt. Insbesondere steht D für eine unsubstituierte Aminogruppe.

Der Phenylenrest B trägt gegebenenfalls 1 bis 3 gleiche oder verschiedene Substituenten, z. B. eine oder zwei Sulfonsäuregruppen, 1, 2 oder 3 Methyl oder Ethyl; ein Chlor; ein oder zwei Methoxy oder Ethoxy; Methyl oder Ethyl und Methoxy oder Ethoxy; oder ein Methyl, Methoxy, Ethoxy oder Chlor zusammen mit einer Sulfonsäuregruppe.

Zur Herstellung der neuen wasserlöslichen Nickelphthalocyanin-azofarbstoffe I werden nach bekannten Verfahren hergestellte Nickelphthalocyanin-N-(aminophenyl)-sulfonamidsulfonsäuren der allgemeinen Formel III

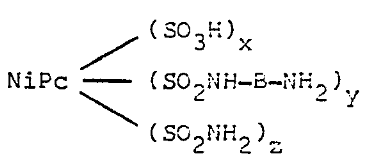

(III)

worin B, x, y und z die oben angegebene Bedeutung haben, diazotiert und die Diazoniumverbindungen auf 1-Phenyl-5-pyrazolon-3-carbonsäuren der allgemeinen Formel IV

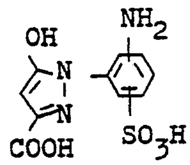

(IV)

gekuppelt.

Die Kupplung erfolgt unter den für Pyrazolonverbindungen bekannten Kupplungsbedingungen bei 0 bis 20 °C in wäßrigem Medium im pH-Bereich von 1 bis 9.

Das Diazoniumsalz der Nickelphthalocyanin-N-(aminophenyl)-sulfonamid-sulfonsäure der Formel III wird nach an sich bekannten Verfahren, z. B. nach dem der DE-B 11 37 154, durch Behandeln mit Natriumnitrit in verdünnter Salzsäure hergestellt. Ein Überschuß an Nitrit wird nach beendeter Diazotierung durch Zusatz von Amidosulfonsäure zerstört.

Die für die Diazoniumverbindung erforderliche Nickelphthalocyanin-N-(aminophenyl)-sulfonamid-sulfonsäure der Formel III wird aus Nickelphthalocyanin durch Chlorsulfonierung in Chlorsulfonsäure bei Temperaturen oberhalb 130 °C und Umsetzung des Chlorsulfonylproduktes mit den entsprechenden Phenylendiaminen in Gegenwart säurebindender Mittel in Wasser erhalten. Die an der Reaktion mit den Phenylendiaminen nicht teilnehmenden Sulfochloridgruppen werden gleichzeitig oder nachträglich hydrolysiert und gewünschtenfalls gleichzeitig oder nachträglich mit Ammoniak zu Sulfonamidgruppen umgesetzt.

Phenylendiamine, die zur Herstellung der Nickelphthalocyanin-N-(aminophenyl)-sulfonamid-sulfonsäuren III verwendet werden können, sind z. B :

1,3-Diamino-4-chlorbenzol, 1,3-Diamino-4-methylbenzol,
1,3-Diamino-4-ethylbenzol, 1,3-Diamino-4-methoxybenzol,
1,3-Diamino-4-ethoxybenzol, 1,4-Diamino-2-methylbenzol,
1,4-Diamino-2-methoxybenzol, 1,4-Diamino-2-ethoxybenzol,
1,4-Diamino-2-chlorbenzol, 1,4-Diamino-2,5-dimethylbenzol,
1,4-Diamino-2,5-diethylbenzol, 1,4-Diamino-2-methyl-5-methoxybenzol, 1,4-Diamino-2,5-dimethoxybenzol,
1,4-Diamino-2,5-diethoxybenzol,
1,3-Diamino-2,4,6-trimethylbenzol,
1,4-Diaminobenzol-2-sulfonsäure,
1,4-Diaminobenzol-2,5-disulfonsäure,
1,4-Diaminobenzol-2,6-disulfonsäure,
1,3-Diaminobenzol-4-sulfonsäure,
1,3-Diaminobenzol-4,6-disulfonsäure,
1-Amino-3-acetylaminobenzol,
1-Amino-3-acetylamino-6-methylbenzol,
1-Amino-3-acetylamino-6-methoxybenzol,
1,4-Diamino-2-chlorbenzol-5-sulfonsäure und
1,4-Diamino-2-methylbenzol-5-sulfonsäure.

Von den genannten sind die 1,3-Diaminobenzol-4-sulfonsäure und das 1-Amino-3-acetylaminobenzol bevorzugt. Bei letzteren muß vor der Diazotierung die N-Acetylgruppe sauer oder alkalisch zur Aminogruppe verseift werden.

Das Verhältnis von x : y : z wird durch die bekannte Wahl der Reaktionsbedingungen, wie Temperatur, Zeit, Phenylendiaminüberschuß und säurebindende Mittel bei der Bildung der Nickelphthalocyanin-N-(aminophenyl)-sulfonamid-sulfonsäure beeinflußt (DE-B 11 37 154).

Im letzten Reaktionsschritt wird das Kupplungsprodukt der allgemeinen Formel V

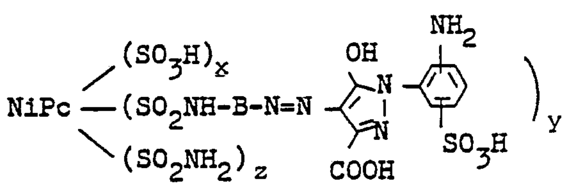

(V)

in der B, x, y und z die oben angegebene Bedeutung haben, mit einem 1,3,5-Triazin der Formel

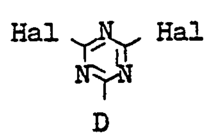

(II)

in der Hal und D die oben angegebene Bedeutung haben, in an sich bekannter Weise in Gegenwart von säurebindenden Mitteln und/oder Puffersubstanzen an der freien Aminogruppe des am Pyrazolon gebundenen Phenyls kondensiert.

Als Beispiele für Halogen-1,3,5-triazine sind zu nennen : 2,4,6-Trichlor-, 2,4,6-Trifluor-, 2,4,6-Tribrom-, 2,4-Dichlor-6-methyl-, 2,4-Dichlor-6-ethyl-, 2,4-Dichlor-6-phenyl- und 2,4-Dibrom-6-phenyl-triazin ; 2,4-Dichlor-(dibrom oder difluor)-1,3,5-triazine, die in 6-Stellung eine der oben für D genannten Gruppen tragen.

Die in 6-Stellung durch nicht-reaktive Gruppen substituierten 2,4-Dihalogen-1,3,5-triazine II werden beispielsweise durch Umsetzen von Trihalogen-1,3,5-triazinen mit den entsprechenden Amino-, Hydroxy- oder Merkaptoverbindungen erhalten.

Der Triazinylrest mit einem nicht-reaktiven Substituenten kann auch erhalten werden, wenn man zunächst V mit dem Trihalogen-1,3,5-triazin umsetzt und dann in das Umsetzungsprodukt die nicht faserreaktive Gruppe einführt.

Die fertigen Farbstoffe werden aus der Reaktionslösung in an sich bekannter Weise isoliert, beispielsweise durch Sprühtrocknung oder durch Aussalzen, Filtrieren und Trocknen.

Vorzugsweise werden die Farbstoffe in Form der Alkalimetall- und/oder Ammoniumsalze isoliert.

Die neuen Farbstoffe eignen sich zum Färben und Bedrucken von Fasermaterialien aus Wolle, Seide, linearen Polyamiden, insbesondere jedoch aus hydroxylgruppenhaltigen Materialien, wie Cellulose, beispielsweise Leinen, Regeneratcellulose und vor allem Baumwoll und ferner von Leder.

Die Herstellung der Färbungen erfolgt beispielsweise durch Direktfärben aus einer Färbeflotte, die alkalisch wirkende Mittel und gegebenenfalls anorganische Salze, wie Alkalimetallchloride oder -sulfate enthält, bei Raumtemperatur oder bei erhöhter Temperatur, beispielsweise zwischen etwa 40 °C und etwa 100 °C.

Besitzt der Farbstoff oder das Gemisch jedoch keine oder nur eine geringe Affinität zur Faser, arbeitet man vorteilhaft so, daß man das Fasermaterial mit den wäßrigen Lösungen der Farbstoffgemische, die gegebenenfalls alkalisch wirkende Mittel und anorganische Salze enthalten, kalt oder bei mäßiger Temperatur imprägniert, abquetscht und den aufgebrachten Farbstoff gegebenenfalls nach einer Zwischentrocknung fixiert.

Wenn die verwendete Klotzflotte ein alkalisch wirkendes Mittel enthält, erfolgt die anschließende Fixierung beispielsweise durch Dämpfen, durch Thermofixieren oder auch durch mehrstündiges Liegenlassen der imprägnierten Ware. Maßgebend für die Auswahl des Fixierverfahrens sind dabei Art und Menge des eingesetzten alkalisch wirkenden Mittels.

Bei Verwendung von Imprägnierbädern, die kein alkalisch wirkendes Mittel enthalten, bringt man die imprägnierte Ware anschließend zunächst beispielsweise in ein salzhaltiges Bad mit alkalisch wirkendem Mittel ein und unterwirft sie dann einem der oben beschriebenen Fixierprozesse.

Als alkalisch wirkende Mittel werden vorzugsweise Alkalimetallhydroxide, -carbonate, -bicarbonate, -phosphate, -borate oder -silikate oder Alkalimetallsalze der Trichloressigsäure oder Mischungen der genannten Verbindungen verwendet.

Für die Verwendung im Textildruck werden die Farbstoff- (gemische), gegebenenfalls unter Zusatz von gebräuchlichen Hilfsmitteln, wie beispielsweise Harnstoff oder Dispergiermitteln, in Wasser gelöst und Verdickungsmittel, z. B. Methylcellulose oder Alginat-Verdickung, zugegeben. Zu den so erhaltenen Pasten gibt man die vorstehend genannten alkalisch wirkenden Mittel und bedruckt die Ware in üblicher Weise. Die Fixierung erfolgt dann durch Dämpfen oder Thermofixieren in bekannter Weise.

Man kann das Fasermaterial aber auch mit neutralen oder schwach sauer eingestellten Druckpasten, die kein alkalisch wirkendes Mittel enthalten, bedrucken. In diesem Fall wird dann das Fasergut entweder vor oder nach dem Bedrucken mit alkalisch wirkenden Mitteln behandelt, beispielsweise mittels einer kurzen Passage durch eine salzhaltige, alkalische Lösung, und anschließend einem der oben erwähnten Fixierverfahren unterworfen. In sehr einfacher Weise kann die Fixierung aber auch so erfolgen, daß man die bedruckte Ware eine heiße, salzhaltige, alkalische Lösung passieren läßt.

Die Erfindung soll durch die folgenden Beispiele weiter erläutert werden. Die im folgenden angegebenen Teile und Prozentangaben beziehen sich auf das Gewicht. Die Temperaturen sind in °C angegeben.

Beispiel 1

282 Teile Nickelphthalocyanin-N-(3-aminophenyl-sulfonamid)-trisulfonsäure der Formel

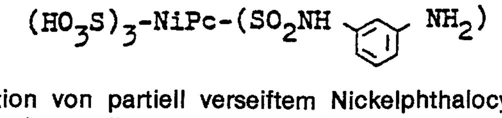

(hergestellt durch Kondensation von partiell verseiftem Nickelphthalocyanin-tetra-sulfochlorid mit 1-Amino-3-acetyl-aminobenzol und anschließender Hydrolyse der Acetylaminogruppe) werden in 4 000 teilen Wasser suspendiert. Die Suspension wird mit verdünnter Natronlauge auf pH 7,5 eingestellt, wobei die Trisulfosäure gelöst wird. Diese Lösung wird mit Natriumnitritlösung, die 25,2 Teile Natriumnitrit enthält, versetzt und auf 5 °C gekühlt. Darauf wird die kalte Lösung auf eine Mischung aus 1 600 Teilen Eiswasser

und 230 Teilen 36 %iger Salzsäure ausgetragen und bei 0 bis 5 °C gerührt. Nach zwei Stunden wird ein eventuell vorhandener Überschuß an Nitrit durch Zugabe von Amidosulfonsäure zerstört. Die Diazosuspension wird zu einer kalten Lösung von 102 Teilen 1-(3'-Aminophenylsulfonsäure-5')-pyrazolon-3-carbonsäure in 2 000 Teilen Wasser gegeben. Der pH-Wert wird durch Zugabe von Natriumbicarbonatlösung auf pH 4 bis 5 eingestellt und die Kupplung bei 15 bis 20 °C beendet. Aus der Lösung wird das brillantgrüne Kupplungsprodukt durch Ansäuern mit 300 Teilen 36 %iger Salzsäure und Zugeben von 300 Teilen Natriumchlorid gefällt, die Fällung auf einer Filternutsche abgesaugt und mit 2 %iger Salzsäure nachgewaschen.

Der feuchte Rückstand wird in 2 500 Teilen Wasser und 1 500 Teilen Eis suspendiert und mit verdünnter Natronlauge ein pH von 7,5 eingestellt. Dann wird eine feinteilige Suspension von 62,7 Teilen 2,4,6-Trichlor-s-triazin in 700 Teilen Eiswasser eingetragen und im Reaktionsgemisch bei 0 bis 5 °C der pH-Wert durch Zugabe von verdünnter Natronlauge zwischen 5,0 und 5,5 gehalten. Wenn keine Natronlauge mehr verbraucht wird, dies ist nach etwa 3 Stunden der Fall, werden der Mischung 70 Teile 25 %iger Ammoniak zugegeben und 3 Stunden bei 35 bis 40 °C gerührt. Aus dem Reaktionsgemisch wird der Farbstoff durch Zugeben von 3 000 Teilen gesättigter Natriumchloridlösung ausgesalzen, die Suspension mit verdünnter Salzsäure auf pH 8,6 gestellt, abgesaugt, abgepreßt und getrocknet.

Ausbeute : 500 Teile Farbstoff. Der Farbstoff entspricht der Formel

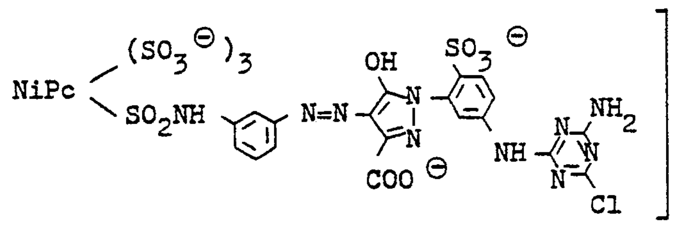

5 $M^{\oplus}$

$M^{\oplus} = H^{\oplus}$ , $Na^{\oplus}$ und/oder $NH_4^{\oplus}$

Beispiel 2

Es wird wie in Beispiel 1 angegeben gearbeitet, jedoch werden anstelle von 282 Teilen Nickelphthalocyanin-N-(3-aminophenyl-sulfonamid)-trisulfonsäure die äquivalente Menge Nickelphthalocyanin-N-(3-amino-4-sulfophenylsulfonamid)-sulfonsäure der Formel

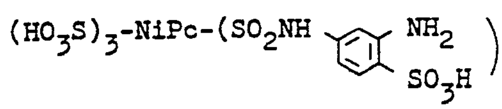

anstelle von 25,2 Teilen Natriumnitrit werden 27 Teile Natriumnitrit und statt 102 Teile werden 108 Teile 1-(3'-Aminophenylsulfonsäure-5')-5-pyrazolon-3-carbonsäure angewendet. Nach dem Ansäuern mit 800 Teilen 36 %iger Salzsäure und dem Aussalzen mit 400 Teilen Natriumchlorid erhält man das Kupplungsprodukt, das der Formel

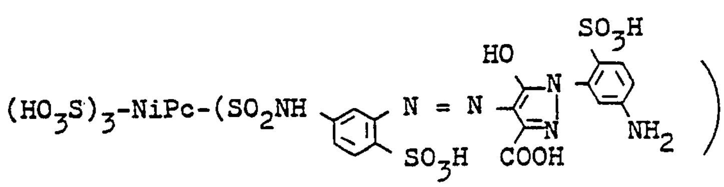

entspricht. Das Kupplungsprodukt wird in der in Beispiel 1 angegebenen Weise zuerst mit 2,4,6-trichlor-1,3,5-triazin und anschließend die Dichlortriazinverbindung mit Ammoniak zum Aminochlortriazinderivat umgesetzt.

Aus der brillantgrünen Reaktionslösung erhält man durch Sprühtrocknung den Farbstoff in Form eines Pulvers. Ausbeute : 480 Teile Farbstoff der Formel I mit

B = 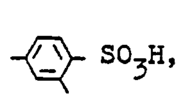 , A = 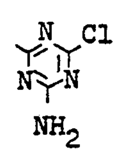

x = 3,
y = 1 und z = 0.

Färbebeispiel

15 Teile Farbstoff des Beispiels 2 werden zusammen mit 20 Teilen Natriumbicarbonat und 100 Teilen Harnstoff in einem Liter Wasser gelöst und die Flotte auf einem Foulard auf Baumwollgewebe geklotzt und abgequetscht. Nach dem Trocknen wird 8 Minuten bei 102 °C gedämpft. Nach kochendem Seifen, Spülen und Trocknen erhält man eine sehr farbstarke, brillantgrüne Färbung mit hoher Lichtechtheit und sehr guten Naßechtheiten.

## Ansprüche

1. Wasserlösliche Nickelphthalocyaninazofarbstoffe, die in Form der freien Säuren der allgemeinen Formel

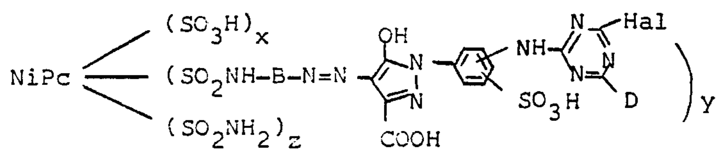

entsprechen, worin

NiPc ein (x + y + z)-wertiger Nickelphthalocyaninrest,
y = 1 oder 2,
x = 1, 2 oder 3,
z = 0 oder 1, wobei 3 ≤ (x + y + z) ≤ 4 ist,
B gegebenenfalls durch $—SO_3H$, $—OCH_3$, $—OC_2H_5$, —Cl, $CH_3$ oder $—C_2H_5$ substituiertes Phenylen, wobei die Zahlen der Substituenten bis zu 3 betragen können,
Hal Chlor, Brom, Fluor und
D Fluor, Chlor, Brom oder einen nicht-faserreaktiven Substituenten bedeuten.

2. Farbstoffe gemäß Anspruch 1, dadurch gekennzeichnet, daß diese in Form der Alkalimetall- und/oder Ammoniumsalze vorliegen.

3. Farbstoffe gemäß Anspruch 1 oder 2, dadurch gekennzeichnet, daß in der Formel D als nicht-faserreaktiver Substituent für $C_1$- bis $C_4$-Alkoxy, Alkoxyalkoxy mit insgesamt 3 bis 5 C-Atomen, Amino, Mono-$C_1$- bis $C_4$-alkylamino oder Di-$C_1$- bis $C_4$-alkylamino steht.

4. Farbstoffe gemäß Anspruch 1 oder 2, dadurch gekennzeichnet, daß in der Formel D für Amino steht.

5. Farbstoffe gemäß den Ansprüchen 1 bis 4, dadurch gekennzeichnet, daß in der Formel B für einen 1,3-Phenylen- oder einen 1,3-Phenylen-4-sulfon-rest steht.

6. Verwendung der Farbstoffe gemäß den Ansprüchen 1 bis 5 zum Färben von Cellulosefasern enthaltendem Material oder von Leder.

## Claims

1. A water-soluble nickel phthalocyanine-azo dye which in the form of the free acid corresponds to the general formula

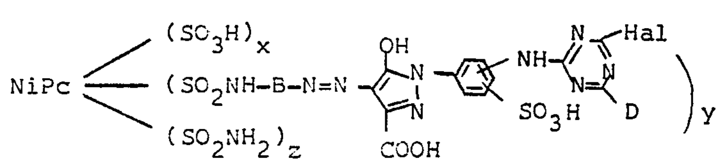

where

NiPc is an (x + y + z)-valent nickel phthalocyanine radical,
y is 1 or 2,
x is 1, 2 or 3,
z is 0 or 1 and 3 ≤ (y + x + z) ≤ 4,
B is phenylene which is unsubstituted or substituted by $—SO_3H$, $—OCH_3$, $—OC_2H_5$, —Cl, $—CH_3$ or $—C_2H_5$, the number of substituents being 1, 2 or 3,
Hal is fluorine, chlorine or bromine and
D is fluorine, chlorine, bromine or a substituent which is not fiber-reactive.

2. A dye as claimed in claim 1, in the form of the alkali metal or ammonium salt or of a mixture of these salts.

3. A dye as claimed in claim 1 or 2, wherein in the formula D, as substituent which is not fiber-reactive, is $C_1$-$C_4$-alkoxy, alkoxyalkoxy of a total of 3 to 5 carbon atoms, amino, mono-$C_1$-$C_4$-alkylamino or di-$C_1$-$C_4$-alkylamino.

4. A dye as claimed in claim 1 or 2, wherein in the formula D is amino.

5. A dye as claimed in claims 1 to 4, wherein in the formula B is a 1,3-phenylene or 1,3-phenylene-4-sulfonic acid radical.

6. The use of a dye as claimed in claims 1 to 5 for dyeing material containing cellulosic fibers, or leather.

**Revendications**

1. Colorants azoïques hydrosolubles de la série des phtalocyanines de nickel qui, sous la forme des acides libres, répondent à la formule générale

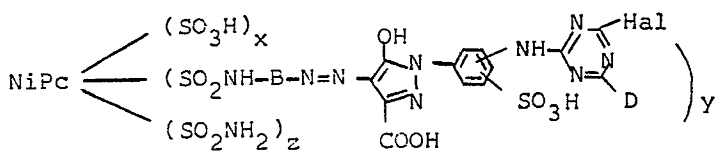

dans laquelle

NiPc représente un radical phtalocyanine de nickel de valence (x + y + z),

y = 1 ou 2

x = 1, 2 ou 3,

z = 0 ou 1, avec $3 \leq (x + y + z) \leq 4$,

B représente un phénylène éventuellement substitué par $-SO_3H$, $-OCH_3$, $-OC_2H_5$, $-Cl$, $-CH_3$ ou $-C_2H_5$, le nombre des substituants pouvant s'élever jusqu'à 3,

Hal un chlore, un brome, un fluor et

D un fluor, un chlore, un brome ou un substituant non réactif avec les fibres.

2. Colorants selon la revendication 1, caractérisés en ce qu'ils se présentent sous la forme des sels de métaux alcalins et/ou d'ammonium.

3. Colorants selon la revendication 1 ou 2, caractérisés en ce que dans la forme, D, lorsqu'il représente un substituant non réactif avec les fibres, est mis pour un alcoxy en $C_1$ à $C_4$, un alcoxyalcoxy contenant 3 à 5 atomes de C au total, un amino, un monoalcoylamino en $C_1$ à $C_4$ ou un dialcoylamino en $C_1$ à $C_4$.

4. Colorants selon la revendication 1 ou 2, caractérisés en ce que, dans la formule, D est mis pour un amino.

5. Colorants selon l'une quelconque des revendications 1 à 4, caractérisés en ce que, dans la formule, B est mis pour un radical 1,3-phénylène ou 1,3-phénylène-4-sulfonique.

6. Utilisation des colorants selon l'une quelconque des revendications 1 à 5 pour la teinture de matières contenant des fibres de cellulose ou de cuirs.